# EUROPEAN PATENT SPECIFICATION

(11) **EP 2 730 495 B1**
(45) Date of publication and mention of the grant of the patent: **27.04.2016**
(21) Application number: 12192403.9
(22) Date of filing: 13.11.2012
(51) Int. Cl.: B64C 1/06, B64C 1/12, B64C 1/40

(54) **Shell structure of a fuselage**
Mantelstruktur für einen Rumpf
Structure de coque d'un fuselage

(43) Date of publication of application: 14.05.2014
(73) Proprietor: Airbus Operations GmbH, 21129 Hamburg (DE)
(72) Inventor: Humfeldt, Dirk, 21129 Hamburg (DE); Noebel, Torsten, 21129 Hamburg (DE); Zimmermann, Kristian, 81249 München (DE)
(74) Representative: Schicker, Silvia

(56) References cited:
- CH-A- 242 779
- US-A- 4 278 485
- US-A- 5 603 472
- US-A1- 2005 207 866
- US-A1- 2006 060 705
- US-A1- 2011 067 951

## Description

The present application relates to a shell structure of a fuselage.

### BACKGROUND OF THE INVENTION

A conventional fuselage of a vehicle, such as an aircraft, a spacecraft, a bus, etc., includes a primary structure, a secondary structure and an optional interior lining. Each element of this differential structure provides a certain function. For instance, the primary structure provides the form of the fuselage and takes up all the forces of the fuselage and loads applied to the fuselage. The secondary structure includes brackets, fasteners etc. for fastening interior components, such as insulating material providing acoustic and thermal insulation between the interior of the fuselage and an outside environment. Further, a lining such as a ceiling, a side lining or floor protects the primary structure and insulation and allows a better visual appearance of the interior of the fuselage than the pure insulation. It is to be understood, that a fuselage comprises a plurality of further components and elements. The present invention is, however, directed to the primary structure of a fuselage and therefore other components and elements are omitted for the sake of clarity.

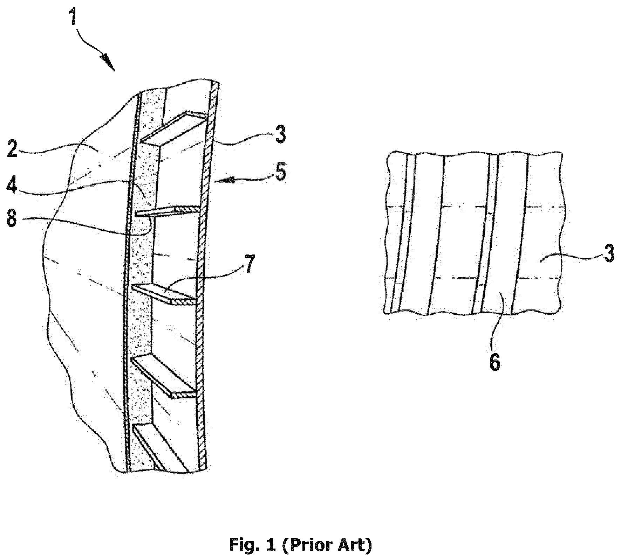

Furthermore, DE 10 2007 003 278 A1 and US 2010/0038487 A1 describe a fuselage structural component, details of which are reproduced in the accompanying Figure 1. The fuselage structural component has an outer skin 2 and an inner framework structure or inner skin 3. At least one foam layer 4 is arranged between the outer skin 2 and the inner skin 3 and can be fastened on the outer skin 2 and/or the inner skin 3.

On the side of the inner skin 3 facing the interior of the aircraft, frames 6 are fastened in order to brace the fuselage and/or to serve as force-introducing elements. In addition, stringers 7 are attached on the outer side of the inner skin 3. The stringers can be adhesively fastened and /or fastened via rivets on the inner skin 3.

It is possible that neither stringers 7 nor frames 6 are fastened to the outer skin2, so that the inner skin 3 forms the framework. It is therefore not absolutely necessary to also form the outer skin 2 as a structural component. However, the outer skin 2 is preferably optimized against impacts from the outside.

The foam layer 4 can serve as thermal insulation, if adhesively fastened on the outer skin 2. Thus, the fuselage has a thin outer skin 2 without a structurally load-bearing function in the sense of aircraft loads, while the load-bearing fuselage structure no longer experiences the ambient temperature.

US 2011/0067951 A1, which discloses the features of the preamble of claim 1, relates to an insulation structure for thermally and acoustically insulating an aircraft. The insulation structure includes a heavy layer being essentially transparent to sound for frequencies below a double-wall frequency of the insulation structure. The insulation structure can be arranged such that it lies on the stringers that serve for the longitudinal reinforcement of the aircraft fuselage. The distance between a heavy layer and an outer skin of the aircraft and the mass of the heavy layer are the decisive parameters for determining the double-wall frequency. The insulation structure may also be positioned on a frame by means of a mounting arrangement. In case the aircraft has a structure of fiber-reinforced plastic, the mounting of the insulating structure can be realized by bonding one component of the mounting arrangement directly onto the fuselage skin by means of an adhesive layer. Alternatively, the component of the mounting arrangement may also be laminated into the structure or into the fuselage skin.

US 2006/0060705 A1 relates to splice joints for joining composite fuselage sections and other shell structures together. A first and a second barrel section of the fuselage can be joined together. An elongated strap is attached to a first edge region of a first skin of the first barrel section and an adjacent second edge region of a second skin of the second barrel section, in order to splice the first skin to the second skin. The strap can be attached to the skins with a plurality of fasteners extending through the strap and the skins. A plurality of fittings are positioned on the strap and extend across a splice joint between stiffeners. A first end portion of each fitting overlays a corresponding first filler and flange portions of an adjacent stiffener. Similarly, a second end portion of each fitting overlays a corresponding second filler and flange portions of the adjacent stiffeners.

However, the use of an outer skin and an inner skin increases the overall weight of the primary structure of the fuselage. When constructing and producing a fuselage a major attempt is to minimize the weight of the overall structure as well as the production costs of such a fuselage.

### SUMMARY OF THE INVENTION

It is therefore an object of the present invention to provide a shell structure for a fuselage with a reduced weight and decreased production costs.

This object is solved by the present invention according to the subject-matter of the independent claim. The dependent claims define preferred embodiments of the present invention.

According to an aspect of the present invention, a shell structure of a fuselage comprises a plurality of ribs arranged in predetermined intervals, an outer skin fastened to each of the plurality of ribs, a plurality of fastening means coupled to the outer skin between the ribs and facing inwards into the fuselage, and an interior structural element being mounted to the outer skin in a load transmitting manner using the fastening means.

Such a shell structure according to the present invention provides a light primary structure compared to conventional fuselages. Since it is free of stringers the production costs as well as the overall fuselage weight is further decreased. Further, the interior structural element can be of a bending resistant and/or buckling resistant material having insulating properties.

The interior structural element can also have a plurality of passages corresponding to the plurality of fastening means, where each passage comprises a bushing. According to an embodiment of the present invention, the bushing is a pot-shaped bushing having a flange and a bottom with an opening, the flange being located at an inwardly facing surface of the interior structural element, and at least a part of the fastening means passes through the opening when the interior structural element is mounted to the outer skin.

According to another embodiment the bushing is an open cylinder configured to allow passage of at least a part of the fastening means through the bushing when the interior structural element is mounted to the outer skin.

According to another aspect of the present invention each fastening means comprises a plate coupled to the outer skin, a bolt coupled to the plate, and a fastener configured for fastening the interior structural element to the bolt.

The bolt can be rigidly attached to the plate and/or can be a threaded bolt.

The plate of the fastening means can comprise a threaded opening, into which the bolt can be threaded.

According to an embodiment of the present invention, the fastener is a nut configured to be mounted onto the bolt and to mount the interior structural element via the bushing at the bottom of the pot-shaped bushing to the outer skin.

According to another embodiment the fastener is a disc having an opening configured to be fastened to the bolt and to mount the interior structural element at the inwardly facing opening of the cylindrical bushing and/or at an inwardly facing surface of the interior structural element to the outer skin.

Each fastening means can further comprise a stand-off configured for mounting the interior structural element spaced apart from the outer skin.

Each interior structural element can also be sized to loosely fit between two ribs and/or covers at least part of at least one rib.

According to a further aspect of the present invention, the shell structure of the fuselage further comprises an interior insulating element attached to an inwardly facing surface of the interior structural element, the interior insulating element is configured for thermally and/or acoustically insulating the interior of the fuselage from the environment outside of the fuselage.

### BRIEF DESCRIPTION OF THE DRAWINGS

The present invention will be described together with the accompanying drawings, where:
- Figure 1: illustrates the shell structure of a conventional fuselage according to the prior art;
- Figure 2A: illustrates an exploded view of a shell structure of a fuselage according to an embodiment of the present invention;
- Figure 2B: illustrates different views of an assembled shell structure of Figure 2A;
- Figure 3A: illustrates an exploded view of a shell structure of a fuselage according to another embodiment of the present invention;
- Figure 3B: illustrates different views of an assembled shell structure of Figure 3A;
- Figure 4: illustrates a cross-section of a fastening means according to an embodiment of the present invention; and
- Figure 5: illustrates a cross-section of a fastening means according to another embodiment of the present invention.

### DETAILED DESCRIPTION OF THE PRESENT INVENTION

The following description of a shell structure of a fuselage and other aspects of the present invention is made in view of the accompanying drawings, where the same or at least similar features and elements are referred to by the same reference numeral. Further, terms, such as inwards, outwards, longitudinal, cross-sectional, front, back, etc., are made in view of an elongated body of a fuselage. A front refers to a head of a vehicle comprising the fuselage pointing in the preferred moving direction. Accordingly, a back refers to the other end of the elongated fuselage. Up and down refer to the respective directions according to the fuselage standing on the ground. Thus, the longitudinal direction of the fuselage corresponds to an X-axis, the up/down-direction corresponds to a Z-axis, while a Y-axis is perpendicular to the X-and Z-axes and points outwards from the fuselage, if the origin of the axes is located in the interior of the fuselage. In addition, the terms "shell structure" and "fuselage structure" are interchangeable in the present specification, since a shell forms most of the structural elements of a fuselage.

As already outlined above in view of Figure 1, a conventional fuselage shell structure consists of a primary structure comprising an inner shell 3 to which frames 6 and stringers 7 are fastened. The illustrated fuselage structure or framework 5 is further covered with an outer skin 3 having an insulating foam 4 fastened to it on the inner surface. As noted above, the fuselage comprises a plurality of further components and elements, which have been omitted in the figures for the sake of clarity.

The present invention provides a different fuselage shell structure having a primary structure and insulation which are lighter and can be produced at lower costs than the conventional structure. The present invention is particularly applicable to any form of fuselage, and in particular to the fuselage of a vehicle, e.g. an aircraft, a spacecraft, a bus, a boat or ship, etc..

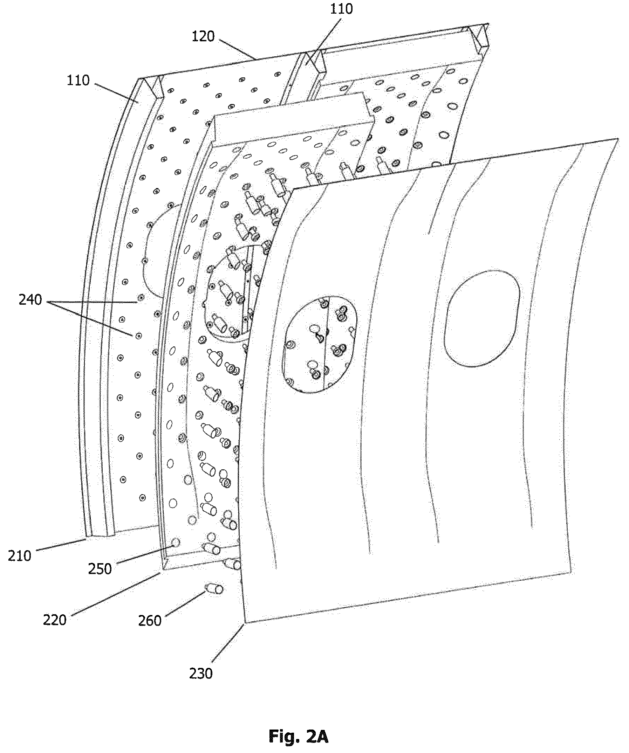

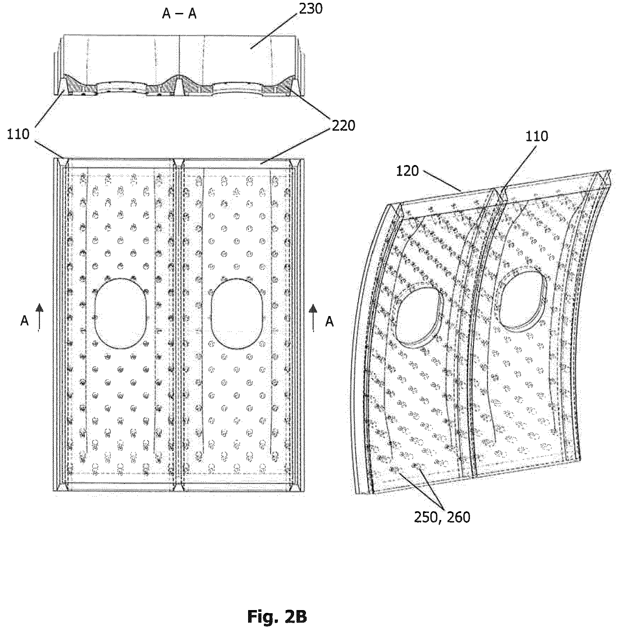

With reference to Figures 2A and 2B, a section of a shell structure of a fuselage according to an embodiment of the present invention is illustrated. In detail, Figure 2A depicts an exploded view of the elements of a shell structure section, while Figure 2B illustrates different views of the assembled shell structure of Figure 2A. The different views in Figure 2B include a view from the interior perspective (lower left illustration), a cross-sectional view according to section A - A (upper illustration), and a 3-dimensional view of the shell structure section (lower right illustration). Although only a shell section of the side of a fuselage is depicted, the invention is applicable for all sections of the fuselage shell. The illustrated section is therefore exemplary only.

According to the present invention a shell structure of a fuselage comprises a primary structure 210 consisting of ribs 110 and an outer skin 120. The ribs 110, also referred to as formers or frames, can be the same as those employed in conventional fuselage shell structures. Further, a rib 110 preferably has a trapezoidal cross-section, but can have any cross-sectional form required by the fuselage form, the loads to carry, the location of the rib within the fuselage, or other characteristics.

An entire rib 110 may have a circular, elliptical, rectangular or ovoid form mapping to at least a part of a cross-section of the fuselage. Preferably a rib 110 has a form corresponding to a cross-section of the fuselage (on the Y-Z-plane) at a particular longitudinal position (on the X-axis). In case of an aircraft the ribs 110 may have varying diameters, and in particular at the front and back of the fuselage the diameter decreases towards the respective end of the fuselage.

The ribs 110 can be made of a metal material, such as aluminium, or a composite, such as a fibre laminate, fibre reinforced plastic material (e.g. carbon fibre laminate-CFK, glass fibre laminate - GRP/GFK), or fibre-metal hybrid material. The present invention is, however, not limited to these materials.

In order to form the shell structure of a fuselage for a vehicle, a plurality of ribs is arranged at predetermined intervals, i.e. in a predetermined distance to each other. The distance between two ribs depends on the forces and loads to be induced into the structure. It also depends on other constraints, such as windows, doors, other openings in the fuselage, wings, and also interior elements to be installed in or at the fuselage shell.

An outer skin 120 then covers the plurality of ribs 110 in order to form the primary structure of the fuselage according to the present invention. The outer skin 120 is coupled to the ribs in a force-fitting and load transmitting manner, i.e. mounted thereto by, for example, welding or riveting. The present invention is not restricted to such types of mounting, but also includes other forms of attachment, such as an adhesive or cement or laminating the two parts together.

The outer skin 120 can be made of different materials, for example, corresponding to the material used for the ribs 110. For instance, it can be a metal, metal material, a laminate, such as CFK or GRP, or other - even hybrid - materials.

In case that the outer skin 120 and the ribs 110 are made of a laminate, both components can form an integral element, i.e. a single-component primary structure. On the other hand, the two components can also be manufactured separately and are then mounted together by further laminating or by using an adhesive.

Referring back to Figures 2A and 2B, the fuselage shell structure according to the embodiment of the present invention further includes an interior structural element 220 which is coupled or mounted to the outer skin 120 in a force-fitting or load transmitting manner. That is, forces and loads transmitted by the primary structure 210 towards the bearing, such as undercarriage, wheels, wings etc., can partly be absorbed and diverted by the interior structural element 220 from/to the outer skin 120. The interior structural element 220 can therefore be considered as forming part of the primary structure 210.

In order to allow absorbing, diverting and transmitting of forces, the interior structural element 220 is made of a bending resistant material and/or a buckling resistant material, such as a rigid or semi-rigid foam. This structural foam is preferably a closed-cell foam, in order to reduce water absorption. In addition, the material is thermoplastic and hence can be shaped by heat. This reduces the machining costs and waste material. The foam material should also be fire resistant and resistant against chemicals in the same manner as the primary structure 210.

Exemplary foams are Apex®-foam, Airex®-foam Rohacell®-foam or an Aerogel-foam being a synthetic porous ultralight material derived from a gel and having a constant density. Further, a variable density foam or a polyurea based foam can also be used. The interior structural element 220 can also comprise PMI-foam with a CFK-skin.

The present invention is not restricted to the above-mentioned types of foam, but includes all materials fulfilling the above and below purposes.

In particular, the interior structural element 220 is coupled to the outer skin 120 to avoid buckling of the outer skin 120. It therefore provides sufficient strength that the outer skin is prevented from buckling and/or kinking.

In addition, the interior structural element 220 also has acoustic and/or thermal insulating properties. Due to this property, the interior structural element 220 can also be considered as an integrated element of the primary structure having acoustic and/or thermal insulating properties.

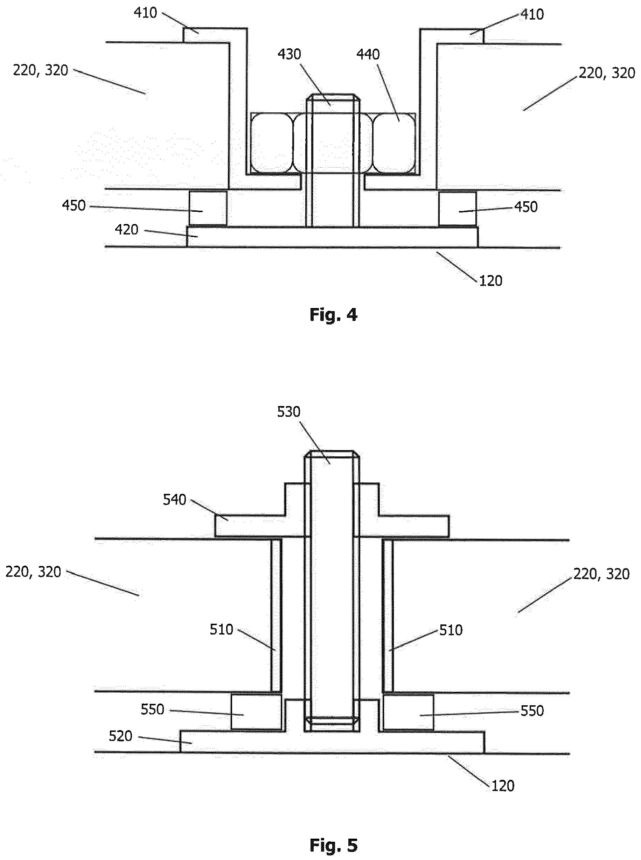

As noted above, the interior structural element 220 is directly coupled or mounted to the outer skin 120. This is accomplished by a plurality of fastening means. Such fastening means are illustrated in Figure 2A as pins 240 on the inwardly facing surface of the outer skin 120. In addition, fastening means can also be installed on any portion of the ribs 110 facing inwards and which is substantially parallel to the outer skin, such as a foot portion of a rib 110. The fastening means will be described in more detail below with respect to Figures 4 and 5.

To accomplish a good transmission of loads and forces into/from the interior structural element 220, the pins 240 are spaced apart from one another by 4cm to 20cm, preferably 6cm to 12cm, and more preferably 8cm. Additional pins 240 can be installed. For example, pins 240 can be arranged on a regular grid (e.g. on the corners of a plurality of squares) having an additional pin in the center of each regular grid element (e.g. the center point of each square). The pins 240 can be arranged on a regular grid or according to another pattern, e.g. depending on the location of the ribs 110 and/or openings, such as windows, doors, etc., or depending on interior constraints, such as ducts, wires, etc..

Corresponding to the fastening means 240, the interior structural element 220 includes passages 250 or other means allowing the mounting of the interior structural element 220 to the outer skin 120 via the fastening means 240.

Again with respect to Figures 2A and 2B, a cover sheet or lining 230 is provided to cover the interior structural element 220. It provides the interior surface of the fuselage as it appears to passengers of the vehicle. This lining 230 can be customized to the individual owner of the vehicle. Further, the lining 230 can also be part of the interior structural element 220. In this case, covers (not shown) may be necessary to cover any passages 250 in the interior structural element 220, in order to prevent unauthorized access to the fastening means 240.

The present invention hence provides an integral primary structure, where the interior structural element 220 is at least partly, i.e. in a load transmitting manner, integrated into the primary structure of the fuselage.

The present invention is therefore advantageous over a conventional fuselage structure, since fewer expensive components are necessary for forming the primary structure of a fuselage and the insulation of the fuselage. Moreover, due to the bending/buckling resistant material of the interior structural element 220, stringers are not required for the fuselage structure.

Thus, the present invention reduces costs due to the saving of material for the primary structure, as well as costs of labour for installing the stringers. Depending on the material of the interior structural element 220, the overall weight of the fuselage structure can also be reduced.

Referring back to Figure 2A and the upper illustration of Figure 2B, an embodiment of the present invention will now be described. As illustrated in these Figures, interior structural element 220 is sized to fit in between two ribs 110 and has a certain thickness throughout its central part. At its sides, the thickness increases, in order to cover the rib 110, i.e. to provide sufficient insulation also on the rib 110.

On the central axis of the cross-section of a rib 110, two interior structural elements 220 are adjoining each other to provide a closed insulation over each rib 110. It will be understood by the person skilled in the art that two interior structural elements 220 do not need to adjoin each other on the central axis of the rib 110. The present invention also includes modifications, where a structural element covers an entire rib, or where the size of a structural element 220 is chosen, so that a plurality of ribs is covered by a single structural element 220.

In addition, the thickness of the structural element 220 may not only depend on the insulation of the ribs 110 and outer skin 120, but can also depend on the interior form required for the interior design of the vehicle. For instance, the surface of the structural element 220 facing inwards may be formed in such a manner, that only a thin lining 230 needs to be applied in order to have the desired form and surface of the interior wall of the aircraft.

The interior structural element 220 further includes openings for windows, doors or other openings required by the aircraft. Element 220 can also comprise channels or other hollow spaces for wires, ducts, hydraulic lines, etc..

As noted above, figures 2A and 2B illustrate a plurality of passages 250 provided through the interior structural element 220. These passages 250 are arranged in such a manner that each one corresponds to a fastening means 240.

Into each passage 250 a bushing 260 or other casing may be inserted in order to provide a means for fastening element 220 to the outer skin 120 and in order to shield the material of the interior structural element 220 from a fastening means 240. The length or depth of each bushing 260 may vary depending on the corresponding thickness of the interior structural element 220 at the position of the passage 250 and bushing 260. The passages, bushings and fastening means are described in more detail below with respect to Figures 4 and 5.

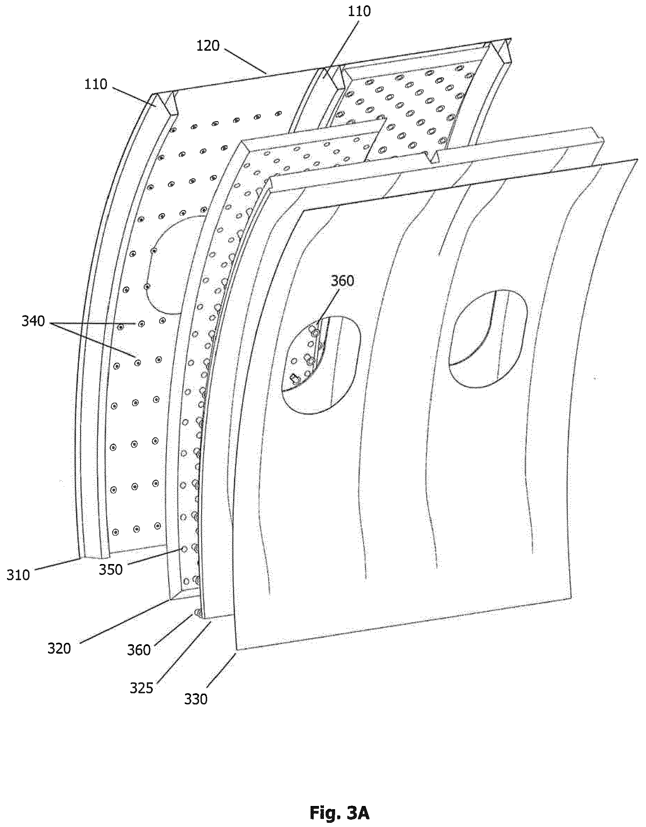

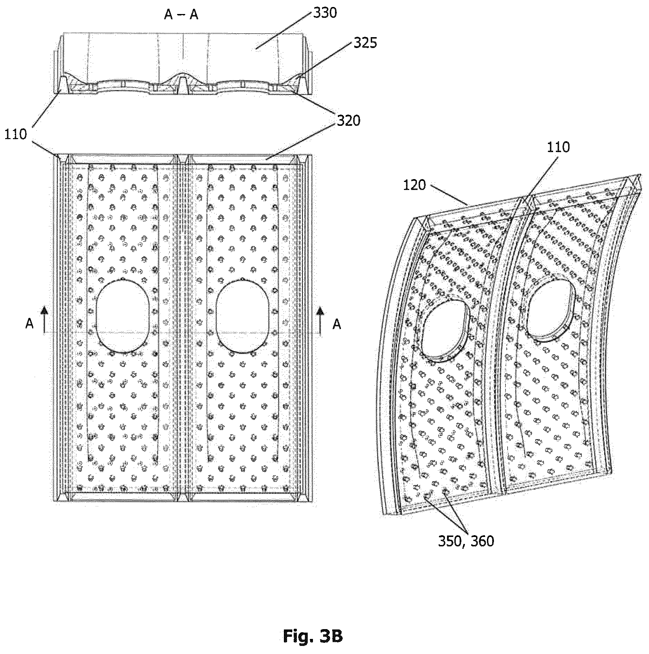

Turning now to Figures 3A and 3B, a section of a shell structure of a fuselage according to another embodiment of the present invention is illustrated. In detail, Figure 3A depicts an exploded view of the elements of a shell structure section, while Figure 3B illustrates different views of the assembled shell structure of Figure 3A. The different views in Figure 3B include a view from the interior perspective (lower left illustration), a cross-sectional view according to section A - A (upper illustration), and a 3-dimensional view of the fuselage section (lower right illustration). Although only a shell section of the side of a fuselage is depicted, the invention is applicable for all sections of the fuselage shell. The illustrated section is therefore exemplary only.

This embodiment also provides a shell structure of a fuselage comprising a primary structure 310 consisting of ribs 110 and an outer skin 120 fastened to each of the ribs as in the previous embodiment. According to this embodiment, an interior structural element 320 is provided between two ribs, so that it loosely fits between the two ribs. The interior structural element 320 may also closely fit between two ribs. A loose fit, however, has the advantage that the interior structural element 320 can be mounted easier and hence faster.

The interior structural element 320 has the same thickness at most of its dimensions. For instance, the thickness may decrease towards each side facing a rib, and thereby forming tapered ends of the interior structural element 320. This allows an easy-to-install element 320, while still providing strength to the outer skin 120. Further, the interior structural element 320 is made of a material as indicated above for interior structural element 220 (Figures 2A and 2B) of the previous embodiment.

The interior structural element 320 is further covered on its inwardly facing surface, i.e. its interior surface, with an interior insulating element 325. Since both elements 320, 325 are interior elements they are herein also referred to as a primary interior element 320 and a secondary interior element 325. The secondary interior element 325 may be made of the same material as the primary interior element 320 or may be made of a different material. For example, the secondary interior element 325 may consist of an insulation material which is less bending resistant than the primary interior element 320, such as foam, glass fibre or other woollen material. Further, the secondary interior element 325 may provide better acoustic and/or thermal insulation properties than the primary interior element 320.

The interior insulating element 325 is formed in such a way that it provides thermal and/or acoustic insulation of the interior of the fuselage. It therefore covers at least part of a rib 110. Thus, the interior insulating element 325 together with the interior structural element 320 provides the same functions as the interior structural element 220 described above with respect to the previous embodiment of Figures 2A and 2B.

The primary and secondary interior elements 320, 325 can be formed in such a way that channels or other hollow spaces are formed when both elements 320, 325 are mounted to one another. This allows the omission of brackets and fasteners for ducts, wires, lines etc. and therefore further saves costs and time during installation. Further, there may be even an air gap or air space over substantially the entire size of primary interior element 320. This allows a physical separation of the primary structure from the interior structure of the fuselage and provides space for other equipment running through the shell structure of the fuselage.

The present embodiment consisting of two elements 320 and 325 provides the advantage that the interior structural element 320 can have the same form, i.e. size and thickness, for each vehicle, while the interior insulating element 325 provides an interior surface which is customizable for the owner of the vehicle. Such en element 320 can be installed faster, since the fastening means 340 do not need to be mounted at positions specified by interior requirements and are therefore more regular.

As before, the present embodiment also comprises a lining 330 which covers and protects the interior insulating element 325. This lining 330 may also be customizable in its form, colour and further features integrated into the lining as it was mentioned above with respect to the previous embodiment. The lining can also be an integral part of interior insulating element 325, thereby reducing the number of elements to be installed.

Each of the interior structural element 320, interior insulating element 325 and lining 330 may further comprise openings for particular features in the skin of a fuselage, such as windows, doors or other openings. Figures 3A and 3B exemplarily depict window openings.

The embodiment of Figures 3A and 3B also includes a plurality of passages 350 in the interior structural element 320 for fastening the interior structural element 320 to the outer skin 120. The passages 350 may further include a bushing 360 or other casing as will be outlined in more detail below with respect to Figures 4 and 5. In the present embodiment, a unique bushing 360 can be manufactured, i.e. having the same depth or length, as the interior structural element 320 has substantially the same thickness throughout its dimensions. This reduces the production costs further, since only bushings 360 of a single type have to be installed and erroneous installation of bushings 360 is avoided.

The interior insulating element 325 either covers the passages 350 of the interior structural element 320 or has passages itself (not shown) corresponding to the passages 350 of the interior structural element 320. In either case, at least the lining 330 will cover the passages and fastening means in order to avoid access to the fastening means or other parts of the primary structure of the fuselage.

Referring now to Figures 4 and 5 illustrating two embodiments of fastening means 240, 340 and corresponding passages 250, 350 and bushings 260, 360 in order to fasten the interior structural element 220, 320 to the outer skin 120 of the fuselage (see Figs. 2A and 3A). The two types of fastening means and bushings can be employed with either of the above embodiments described in regard of Figures 2 and 3.

In an embodiment according to Figure 4, the interior structural element 220, 320 has a passage 250, 350 of a particular size. Into the passage 250, 350 a bushing 410, 260, 360 is inserted. The bushing 410 can be fixed in the passage 250, 350 by an adhesive or can be tucked into the passage without further support.

The bushing 410 has a pot-shaped form with a flange at the upper rim of the pot-shaped form and a bottom part at the opposite end. Both the flange and the bottom part are substantially parallel to the inwardly and outwardly facing surfaces of the interior structural element 220, 320, respectively. Each of the flange and bottom part can either extend from the respective surface or provide substantially a continuous surface. As depicted in Figure 4, the flange extends from the inwardly facing surface of element 220, 320, while the bottom part provides a substantially continuous surface with outwardly facing surface of element 220, 320. Using this form, the bushing 410 can easily be tucked into the passage 250, 350.

The size of the flange shall be sufficient for preventing the bushing from moving through the passage 250, 350 of the interior structural element 220, 320 and for transmitting loads and forces from the fastening means (explained below) into the interior structural element 220, 320. As will be understood by the person skilled in the art, the pot-shaped bushing 410 can also have other forms or dimensions as described above. For example, the depth or length of the pot-shaped bushing can vary in order to adapt to the thickness of the interior structural element 220, 320. According to another example, the passage 250, 350 and bushing 410 can have a conical shape, so that the bushing fits into the passage without the necessity of a flange while the bottom part is still at the right position. According to yet a further example, the bushing 410 can have a cube-like form with or without a flange.

The outer width or diameter of the bushing shall correspond to the width or diameter of the passage, in order to closely fit the bushing into the structural element 220, 320. If a gap would appear between the structural element 220, 320 and the bushing 410, the capability of transmitting forces and loads as well as the insulating properties at the bushings 410 would be decreased. However, the present invention does not require a custom-fit bushing and passage.

The bushing 410 provides space and support for the fastening means 240, 340 (Figs. 2A and 3A) consisting of a plate 420 attached to the outer skin 120. The plate 420 can be made of a composite material, such as carbon-epoxy, glass-epoxy, glass-PEEK, glass/carbon-PEI etc. The present invention is not limited to such plate materials, but is also applicable to plates made of other suitable material. The size of the plate 420 is dependent on the loads to be transmitted into/from the outer skin. For example, the plate can be circular with a diameter of 10mm to 40mm, preferably 10mm to 31,8mm. The plate can also have a rectangular shape of similar dimensions.

The plate 420 is, for example, attached to the outer skin 120 with an adhesive providing sufficient strength for coupling the outer skin 120 and the structural element 220, 320. Moreover, since the outer skin of an aircraft is subject of differences in temperature (between -60°C during a flight and +50°C or more while being on ground), the adhesive needs to provide the same strength in the whole temperature range.

However, the plate 420 can also be mounted to the outer skin 120 in other ways, such as welding, riveting or laminating, if the outer skin is made of a reinforced laminate. For instance, if the outer skin 120 is made of a laminate, the plate 420 can be laminated to the outer skin 120 or could already be integrated into the outer skin 120.

The fastening means 240, 340 (Figs. 2A and 3A) further comprises a bolt 430 coupled or mounted to the plate 420. The bolt 430 is rigidly attached or coupled to the plate 420, i.e. in a force and load transmitting manner in order to transmit forces and loads between the bolt 430 and the plate 420, and hence the outer skin. The bolt 430 may also be coupled to the plate 420 using a ball joint in order to only transmit tractive and compression forces. The bolt may be made of any material. An exemplary bolt is manufactured of titanium. However, it is within the scope of the present invention, to provide bolts of other material, suitable to fulfil the following purposes. The size of the bolt also depends on the loads transmitted to/from the outer skin. An exemplary bolt may have a diameter of 1mm to 8mm, and preferably 2mm to 3mm. The length varies depending on the dimensions of the interior structural element 220, 320 and/or the dimensions of the bushing 410.

As the outer skin and the structural element 220, 320 have a predetermined curvature, the bolt 430 coupled to the plate 420 needs to fit into a corresponding passage 250, 350 of the interior structural element. Thus, the dimensions of the pot-shaped bushing 410 are adapted to the curvature of the outer skin 120 and the location of the bolt. In particular, an easy and fast way of installing the interior structural element 220, 320 is to put the element 220, 320 onto the fastening means 240, 340, so that the bolts 430 are located in respective passages 250, 350. Then, the pot-shaped bushing 410 is inserted into each passage 250, 350 from the interior of the fuselage. An opening at the bottom part of the bushing 410 allows passage of the respective bolt 430, so that the inwardly facing end of the bolt 410 is within the pot-shaped bushing 410. The opening can be centrally or eccentrically located at the bottom part of the pot-shaped bushing 410 in order to allow optimum passage of the bolt 430 into the bushing 410.

Since there is a plurality of passages 250, 350 and bolts 430, it may be difficult to install the structural element 220, 320 onto the corresponding plurality of bolts 430 (see also pins 240, 340 in Figures 2A and 3A). Therefore, the width of the passage 250, 350, the size of the bushing 410 as well as the length of the bolt 430 may be chosen based on the size, form and curvature of the interior structural element 220, 320 and the outer skin 120. Thus, the length of the bolts 430 may vary over a section of the shell structure, such as the section depicted in Figures 2A to 3B.

In any case, a fastener 440 is put onto the bolt 430 and fastens or mounts the interior structural element 220, 320 to the bolt 430, and hence via the bushing 410, the bolt 430 and the plate 420 to the outer skin 120. For example, a threaded nut screwed onto a threaded bold can be used. Instead of a threaded nut and bolt, a clamping connection between fastener 440 and bolt 430 is also possible.

In order to allow air circulation between the structural element 220, 320 and the outer skin 120, a stand-off 450 is employed between the element 220, 320 and the outer skin 120. For instance, the stand-off 450 can be integrated with the plate 420 or can be placed onto the bolt 430 before installing the interior structural element 220, 320, bushing 410 and fastener 440. The stand-off 450 can be a ring- or square-shaped stand-off having a diameter/size that is slightly bigger than the outer diameter/size of the outwardly facing surface of the bushing 410. Thus, the stand-off 450 is located between the interior structural element 220, 320, and the plate 420 or outer skin 120.

The stand-off does not only allow air circulation, but provides a defined load bearing for the fastener 440 and/or the interior structural element 220, 320.

Turning now to the embodiment depicted in Figure 5, a bushing 510 of a cylindrical shape, such as an open cylinder, or conical-cylindrical shape is employed. For example, the bushing 510 can be installed into the interior structural element 220, 320 before installation of the element 220, 320 at the outer skin 120. This avoids damage to the interior structural element during the installation process. However, the bushing can also be installed at a later step of the installation procedure.

As in the embodiment described with respect to Figure 4, a plate 520 is attached to the outer skin 120 on an interior surface. The plate 520 may be attached to the outer skin 120 with an adhesive, but can also be welded, riveted or attached in a different manner to the outer skin 120. For instance, if the outer skin is made of a laminate, the plate 520 can be laminated to the outer skin 120 or could already be integrated into the outer skin 120.

The plate 520 can be made of a composite material, such as carbon-epoxy, glass-epoxy, glass-PEEK, glass/carbon-PEI etc. The present invention is not limited to such plate materials, but is also applicable to plates made of other suitable material. The size of the plate 520 is dependent on the loads to be transmitted into/from the outer skin. For example, the plate can be circular with a diameter of 10mm to 40mm, preferably 10mm to 31,8mm. The plate can also have a rectangular shape of similar dimensions.

The plate 520 provides an opening and/or cavity with an internal thread or other means for holding a bolt 530. For instance, a clamping connection could be employed in the opening/cavity. The opening may either be formed directly into the plate 520 or may extend from the plate inwardly into the fuselage. The bolt 530 is rigidly attached or coupled to the plate 520, i.e. in a force and load transmitting manner in order to transmit forces and loads between the bolt 530 and the plate 520, and hence the outer skin. The bolt 530 may also be coupled to the plate 520 using a ball joint in order to only transmit tractive and compression forces.

When the structural element 220, 320 is installed to the outer skin 120, a bolt 530 is guided through a respective passage 250, 350 of the interior structural element 220, 320 from the interior of the fuselage and can be fastened in the opening or cavity of a respective plate 520 located at the respective position on the outer skin 120. This embodiment has the advantage that the structural element 220, 320 will not be damaged by bolts already installed at the outer skin during installation.

The bolt may be made of any material suitable for the above and below purposes. An exemplary bolt is manufactured of titanium. However, it is within the scope of the present invention, to provide bolts of other material, suitable to fulfil the following purposes. The size of the bolt also depends on the loads transmitted to/from the outer skin. An exemplary bolt may have a diameter of 1mm to 8mm, and preferably 2mm to 3mm. The length varies depending on the dimensions of the interior structural element 220, 320 and/or the dimensions of the bushing 510.

If the bushing 510 is not installed yet, it can also be guided into the passage 250, 350. The bushing can also be fixed or attached to the interior structural element in the same manner as described above with respect to the embodiment of Figure 4. The bushing 510 thereby surrounds the bolt 530 and fills a gap between the passage 250, 350 and the bolt 530. Thus, a better insulation can be provided, while employing a better load transmission as will be explained below.

The interior structural element 220, 320 is then mounted to the outer skin with a fastener 540, such as a plate or disc, having an opening that fits closely over the bolt 530. For instance, the fastener opening and the bolt 530 may have a thread, so that the fastener is screwed onto the threaded bolt 530. According to another example, a clamping connection can be used, so that the plate 540 is easily guided over the bolt 530 and quickly fastened thereto. This reduces the time necessary to install the interior structural element 220, 320 to the outer skin 120.

The bushing 510 further provides the advantage that the interior structural element 220, 320 is not damaged, e.g. crushed, when too much force is applied onto the fastener 540. The bushing provides sufficient strength to resist a crushing force of the fastener 540. The length of the bushing is thereby chosen to provide enough pressure from the fastener 540 onto the structural element 220, 320 in order to securely mount the interior structural element 220, 320 to the outer skin 120.

Again, a stand-off 550 can be placed between the outer skin 120 and/or plate 520 and the structural element 220, 320 and/or bushing 510. The stand-off 550 may be integrated with the plate 520 or be integrated with the bushing 510. If the bushing is installed at the interior structural element 220, 320 before installation thereof at the outer skin, the bushing 510 can be guided into a respective passage 250, 350 from the outwardly facing surface of the interior structural element 220, 320. In this case, a stand-off 550 integrated with the bushing 510 can have greater dimensions than the passage in order to provide a sufficiently large stand-off 550. In another example, the extending opening on the plate 520 may have a sufficient width or size, so that it functions as a stand-off 550.

With respect to both embodiments illustrated in Figures 4 and 5, the stand-off 450, 550 provides a bearing for the interior structural element 220, 320 pressed towards the stand-off 450, 550 by the forces applied by the fastener 440, 540.

It has to be noted that the stand-off 450, 550 may be omitted, in order to have a tight and force-fit connection between the structural element 220, 320 and the outer skin 120. In this case, the structural element 220, 320 does not only prevent buckling or kinking of the outer skin 120, but can also take up forces from the outer skin 120 via frictional forces between the structural element and the outer skin 120.

## Claims

1. Shell structure of a fuselage, comprising:
- a plurality of ribs (110) arranged in predetermined intervals;
- an outer skin (120) fastened to each of the plurality of ribs;
- a plurality of fastening means (240, 340) coupled to the outer skin between the ribs and facing inwards into the fuselage; and
- an interior structural element (220, 320) being mounted to the outer skin in a load transmitting manner using the fastening means, **characterized in that** the interior structural element is of a material having insulating properties and being resistant to bending and/or buckling to such an extent, that stringers are not required for the shell structure.

2. The shell structure according to claim 1, wherein the interior structural element has a plurality of passages (250, 350) corresponding to the plurality of fastening means, and wherein each passage comprises a bushing (260, 360, 410, 510).

3. The shell structure according to claim 2, wherein the bushing is a pot-shaped bushing (410) having a flange and a bottom with an opening, the flange being located at a surface of the interior structural element facing inwards of the fuselage, and wherein at least a part of the fastening means passes through the opening when the interior structural element is mounted to the outer skin.

4. The shell structure according to claim 2, wherein the bushing is an open cylinder (510) configured to allow passage of at least a part of the fastening means through the bushing when the interior structural element is mounted to the outer skin.

5. The shell structure according to any of claims 1 to 4, wherein each fastening means comprises:
- a plate (420, 520) coupled to the outer skin;
- a bolt (430, 530) coupled to the plate; and
- a fastener (440, 540) configured for fastening the interior structural element to the bolt.

6. The shell structure according to claim 5, wherein the bolt is rigidly attached to the plate.

7. The shell structure according to claim 5 or 6, wherein the bolt is a threaded bolt.

8. The shell structure according to claim 7, wherein the plate (520) comprises a threaded opening, and wherein the bolt is threaded into the threaded opening.

9. The shell structure according to claim 3 and any of claims 5 to 8, wherein the fastener is a nut (430) configured to be mounted onto the bolt and to mount the interior structural element via the bushing at the bottom of the pot-shaped bushing.

10. The shell structure according to claim 4 and any of claims 5 to 8, wherein the fastener is a disc (540) having an opening configured to be fastened to the bolt and to mount the interior structural element at the inwardly facing opening of the cylindrical bushing and/or at an inwardly facing surface of the interior structural element.

11. The shell structure according to any of claims 1 to 10, wherein each fastening means further comprises a stand-off (450, 550) configured for mounting the interior structural element spaced apart from the outer skin.

12. The shell structure according to any of claims 1 to 11, wherein each interior structural element is sized to loosely fit between two ribs.

13. The shell structure according to any of claims 1 to 12, wherein each interior structural element covers at least part of at least one rib.

14. The shell structure according to any of claims 1 to 13, further comprising:
- an interior insulating element (325) attached to an inwardly facing surface of the interior structural element, the interior insulating element being configured for thermally and/or acoustically insulating the interior of the fuselage from the environment outside of the fuselage.

## Patentansprüche

1. Schalenstruktur für einen Rumpf, umfassend:
- eine Mehrzahl von Spanten (110), die in vorgegebenen Abständen angeordnet sind;
- eine Außenhaut (120), die an jedem der Spante befestigt ist;
- eine Mehrzahl von Befestigungsmitteln (240, 340), die mit der Außenhaut zwischen den Spanten gekoppelt sind und in den Rumpf hineinzeigen; und
- ein Innenstrukturelement (220, 330), das unter Verwendung der Befestigungsmittel lastübertragend an der Außenhaut angebracht ist,
**dadurch gekennzeichnet, dass** das Innenstrukturelement aus einem Material besteht, das isolierende Eigenschaften aufweist und gegen Biegung und/oder Knicken in solch einem Maße widerstandsfähig ist, dass Stringer für die Schalenstruktur nicht notwendig sind.

2. Schalenstruktur gemäß Anspruch 1, wobei das Innenstrukturelement eine Mehrzahl von Durchgängen (250, 350) entsprechend der Mehrzahl von Befestigungsmitteln aufweist, und wobei jeder Durchgang eine Buchse (260, 360, 410, 510) umfasst.

3. Schalenstruktur gemäß Anspruch 2, wobei die Buchse eine topfförmige Buchse (410) ist, die einen Flansch und einen Boden mit einer Öffnung aufweist, wobei der Flansch an einer Oberfläche des inneren Strukturelements, die in das Innere des Rumpfes zeigt, liegt, und wobei mindestens ein Teil des Befestigungsmittels durch die Öffnung führt, wenn das Innenstrukturelement an der Außenhaut angebracht ist.

4. Schalenstruktur gemäß Anspruch 2, wobei die Buchse ein offener Zylinder (510) ist, der ausgebildet ist, mindestens einen Teil des Befestigungsmittels durch die Buchse durchzulassen, wenn das Innenstrukturelement an der Außenhaut befestigt ist.

5. Schalenstruktur gemäß einem der Ansprüche 1 bis 4, wobei jedes Befestigungsmittel umfasst:
- eine Platte (420, 520), die mit der Außenhaut gekoppelt ist;
- einen Bolzen (430, 530), der mit der Platte gekoppelt ist; und
- einen Befestiger (440, 540), der eingerichtet ist, das Innenstrukturelement an dem Bolzen zu befestigen.

6. Schalenstruktur gemäß Anspruch 5, wobei der Bolzen fest an der Platte angebaut ist.

7. Schalenstruktur gemäß Anspruch 5 oder 6, wobei der Bolzen ein Gewindebolzen ist.

8. Schalenstruktur gemäß Anspruch 7, wobei die Platte (520) eine Gewindeöffnung umfasst, und wobei der Bolzen in die Gewindeöffnung geschraubt ist.

9. Schalenstruktur gemäß Anspruch 3 und einem der Ansprüche 5 bis 8, wobei der Befestiger eine Mutter (430) ist, die ausgebildet ist, auf dem Bolzen befestigt zu werden und das Innenstrukturelement über die Buchse an dem Boden der topfförmigen Buchse zu befestigen.

10. Schalenstruktur gemäß Anspruch 4 und einem der Ansprüche 5 bis 8, wobei der Befestiger eine Scheibe (540) ist, die eine Öffnung aufweist, die ausgebildet ist, an dem Bolzen befestigt zu werden und das Innenstrukturelement an der nach innen gerichteten Öffnung der zylindrischen Buchse und/oder an einer nach innen gerichteten Oberfläche des Innenstrukturelements zu befestigen.

11. Schalenstruktur gemäß einem der Ansprüche 1 bis 10, wobei jedes Befestigungsmittel des weiteren einen Abstandshalter (450, 550) umfasst, der dazu eingerichtet ist, das Innenstrukturelement von der Außenhaut beabstandet zu befestigen.

12. Schalenstruktur gemäß einem der Ansprüche 1 bis 11, wobei jedes Innenstrukturelement eine Größe aufweist, um lose zwischen zwei Spanten zu passen.

13. Schalenstruktur gemäß einem der Ansprüche 1 bis 12, wobei jedes Innenstrukturelement mindestens einen Teil mindestens eines Spants abdeckt.

14. Schalenstruktur gemäß einem der Ansprüche 1 bis 13, des weiteren umfassend:
- ein Innenisolationselement (325), das an einer nach innen zeigenden Oberfläche des Innenstrukturelements angebracht ist, wobei das Innenisolationselement eingerichtet ist, das Innere des Rumpfs von der Umwelt außerhalb des Rumpfes thermisch und/oder akustisch zu isolieren.

## Revendications

1. Structure de coque d'un fuselage, comprenant :
- une pluralité de nervures (110) agencées à intervalles prédéterminés ;
- une enveloppe externe (120) attachée à chacune de la pluralité de nervures ;
- une pluralité de moyens d'attache (240, 340) couplés à l'enveloppe externe entre les nervures et en regard vers l'intérieur dans le fuselage ; et
- un élément structurel intérieur (220, 320) étant monté sur l'enveloppe externe selon un mode de transmission de charge en utilisant les moyens d'attache,
**caractérisé en ce que** l'élément structurel intérieur est composé d'un matériau possédant des propriétés isolantes et étant résistant à la courbure et/ou à la déformation dans une mesure telle que des raidisseurs ne sont pas nécessaires pour la structure de coque.

2. Structure de coque selon la revendication 1, dans laquelle l'élément structurel intérieur comporte une pluralité de passages (250, 350) correspondant à la pluralité de moyens d'attache, et dans laquelle chaque passage comprend une douille (260, 360, 410, 510).

3. Structure de coque selon la revendication 2, dans laquelle la douille est une douille (410) en forme de pot comportant une bride et un fond avec une ouverture, la bride étend placée au niveau d'une surface de l'élément structurel intérieur en regard vers l'intérieur du fuselage, et dans laquelle au moins une partie des moyens d'attache passe à travers l'ouverture lorsque l'élément structurel intérieur est monté sur l'enveloppe externe.

4. Structure de coque selon la revendication 2, dans laquelle la douille est un cylindre ouvert (510) configuré pour permettre le passage d'au moins une partie des moyens d'attache à travers la douille lorsque l'élément structurel intérieur est monté sur l'enveloppe externe.

5. Structure de coque selon l'une quelconque des revendications 1 à 4, dans laquelle chaque moyen d'attache comprend :
- une plaque (420, 520) couplée à l'enveloppe externe ;
- un boulon (430, 530) couplé à la plaque ; et
- un dispositif d'attache (440, 540) configuré pour attacher l'élément structurel intérieur au boulot.

6. Structure de coque selon la revendication 5, dans laquelle le boulon est attaché de manière rigide à la plaque.

7. Structure de coque selon la revendication 5 ou 6, dans laquelle le boulon est un boulon fileté.

8. Structure de coque selon la revendication 7, dans laquelle la plaque (520) comprend une ouverture filetée, et le boulon est vissé dans l'ouverture filetée.

9. Structure de coque selon la revendication 3 et selon l'une quelconque des revendications 5 à 8, dans laquelle le dispositif d'attache est un écrou (430) configuré pour être monté sur le boulon et pour monter l'élément structurel intérieur via la douille au niveau du fond de la douille en forme de pot.

10. Structure de coque selon la revendication 4 et selon l'une quelconque des revendications 5 à 8, dans laquelle le dispositif d'attache est un disque (540) comportant une ouverture configuré pour être attaché au boulon et pour monter l'élément structurel intérieur au niveau de l'ouverture en regard vers l'intérieur de la douille cylindrique et/ou au niveau d'une surface en regard vers l'intérieur de l'élément structurel intérieur.

11. Structure de coque selon l'une quelconque des revendications 1 à 10, dans laquelle chaque moyen d'attache comprend en outre une douille-entretoise autosertissable (450, 550) configurée pour monter l'élément structurel intérieur espacé de l'enveloppe externe.

12. Structure de coque selon l'une quelconque des revendications 1 à 11, dans laquelle chaque élément structurel intérieur est dimensionné pour s'ajuster de manière lâche entre deux nervures.

13. Structure de coque selon l'une quelconque des revendications 1 à 12, dans laquelle chaque élément structurel intérieur couvre au moins une partie d'au moins une nervure.

14. Structure de coque selon l'une quelconque des revendications 1 à 13, comprenant en outre :
- un élément isolant intérieur (325) attaché à une surface en regard vers l'intérieur de l'élément structurel intérieur, l'élément isolant intérieur étant configuré pour isoler de manière thermique et/ou acoustique l'intérieur du fuselage de l'environnement à l'extérieur du fuselage.
